(19) Europäisches Patentamt
European Patent Office
Office européen des brevets

(11) EP 3 845 933 B1

(12) **EUROPEAN PATENT SPECIFICATION**

(45) Date of publication and mention of the grant of the patent:
**07.09.2022 Bulletin 2022/36**

(21) Application number: **19306793.1**

(22) Date of filing: **31.12.2019**

(51) International Patent Classification (IPC):
***G02B 1/115*** *(2015.01)*

(52) Cooperative Patent Classification (CPC):
**G02B 1/115**

(54) **COMPUTER-IMPLEMENTED METHOD FOR DESIGNING AN INTERFERENTIAL STACK FOR AN OPTICAL COMPONENT**

COMPUTERIMPLEMENTIERTES VERFAHREN ZUM ENTWURF EINES INTERFERENZSTAPELS FÜR EINE OPTISCHE KOMPONENTE

PROCÉDÉ MIS EN UVRE PAR ORDINATEUR POUR CONCEVOIR UN EMPILEMENT INTERFÉRENTIEL POUR UN COMPOSANT OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.07.2021 Bulletin 2021/27**

(73) Proprietor: **ESSILOR INTERNATIONAL**
**94220 Charenton-Le-Pont (FR)**

(72) Inventors:
- **LIU, Yu**
  **39346 Singapore (SG)**
- **DING, Xingzhao**
  **39346 Singapore (SG)**
- **TROTTIER-LAPOINTE, William**
  **94220 Charenton-le Pont (FR)**

(74) Representative: **Ipsilon**
**Le Centralis**
**63, avenue du Général Leclerc**
**92340 Bourg-la-Reine (FR)**

(56) References cited:
**US-A1- 2017 235 020**

- **YEUH-YEONG LIOU: "Universal Wideband Antireflection Coating Designs for Substrates over the Visible Spectral Region by Minimizing Search Method", JAPANESE JOURNAL OF APPLIED PHYSICS, vol. 43, no. 7A, 1 July 2004 (2004-07-01), pages 4185-4189, XP055708620, JP ISSN: 0021-4922, DOI: 10.1143/JJAP.43.4185**
- **V. D. VVEDENSKII: "Universal constructions of achromatic antireflection coatings", SOVIET JOURNAL OF OPTICAL TECHNOLOGY, vol. 49, 1 February 1982 (1982-02-01), pages 127-128, XP009521219,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to the manufacturing of optical components, for example ophthalmic lenses.

More particularly, the invention relates to a computer-implemented method for designing an interferential stack of an antireflective coating for an optical component. The method may comprise manufacturing such an antireflective coating.

An antireflective coating is generally applied onto a substrate to form an optical component. In the ophthalmic field, the substrate provides at least part of the optical function of the optical component. The substrate is first coated with a base layer, also called hard coat (HC), so that the base layer is disposed between the antireflective coating and the substrate. This base layer supports the antireflective coating.

The antireflective coating is built or defined from an interferential stack which comprises a plurality of layers of compounds. When all these layers are stacked together, it provides an antireflective function depending on the nature of the compounds, the thickness of the layers as well as the position and the number of these layers.

In conventional antireflective coating design process, substrate materials are never considered. The base layer is considered very thick (a few micrometers) in comparison with normal interferential anti-reflective coatings (generally less than 500 nm) and therefore the base layer is normally regarded as the substrate in conventional antireflective coating design. Practically, however, when the same antireflective stack is applied on different index substrates (coated with the same base layer), optical performance of the antireflective coating differs significantly on different substrates due to an interferential fringe effect because of the index mismatch between hard coat and substrates. Yeuh-Yeong Liou describes in "Universal Wideband Antireflection Coating Designs for Substrates over the Visible Spectral Region by Minimizing Search Method", JAPANESE JOURNAL OF APPLIED PHYSICS, vol. 43, no. 7A, 1 July 2004, pages 4185-4189, a computer-implemented method for designing an interferential stack of an antireflective coating for an optical component to minimize the average reflectivity with different substrates.

In reference to figure 1, an antireflective coating was applied on three kinds of substrates: "KR56", "MR8" & "MR7" references. These substrates have different refractive indices of 1.56, 1.60 and 1.67, respectively. All these substrates are coated with "MP7110" hard coat with refractive index of 1.5. These substrates are coated with a same antireflective stack 10 in a same batch. The refractive index of the substrates increases from the KR56 reference to the MR7 reference. The antireflective coating is defined by the antireflective stack 10 of 9 layers of compounds ($SiO_2$, ITO, $SiO_2$, $ZrO_2$, $SiO_2$, $ZrO_2$, UL, $ZrO_2$, $SiO_2$) having different thickness. A base layer 12 of hard coat is also applied between the substrates and the antireflective coating.

Some optical properties 16 were then determined for each substrate with the antireflective coating and the hard coat applied thereon as well as for a reference substrate which is the antireflective applied on the hard coat only ("1.5AR" reference).

It can be seen on the graph 14 that when the antireflective coating is applied on higher index substrates (e.g. KR56, MR8 and MR7), significant fringe effect appears. The larger the index difference between the hard coat and the substrate is, the more significant the fringe oscillation appears. As a consequence, the antireflective performance differs significantly on different substrates.

A problem that the invention aims to solve is thus to provide a method for designing an antireflective stack providing less variation of the optical properties of the optical component for substrates having different refractive index.

To solve this problem, the invention provides a computer-implemented method for designing an interferential stack of an antireflective coating for an optical component to minimize the deviation in the optical performance when associated with different substrates, the interferential stack being configured to reduce the refractive index mismatch between a substrate and a base layer (HC) of the optical component, the method comprising the steps of:

- providing a plurality of configurations (AR2 to ARn) of an interferential stack and a plurality of substrates to be associated with the interferential stack,
- determining for each configuration (AR2 to ARn) of the interferential stack a value of at least one optical property representative of the optical performance (OP) of the interferential stack, said value of at least one optical property being determined for each substrate,
- determining for each configuration (AR2 to ARn) a deviation of the optical performance (ΔOP) between the substrates depending on the values of a same configuration determined for each substrate, a deviation of the optical performance (ΔOP) being determined for each optical property,
- selecting a configuration (ARs) of the interferential stack having at least one minimized deviation of the optical performance (ΔOP).

This method provides an iterative process enabling to compare a large plurality of configurations of the antireflective stack in order to select the configuration leading to a minimized deviation of the optical performance.

In doing so, the optical performance of the antireflective coating is optimized regardless the substrate onto which it is applied. The method therefore provides an optimized solution minimizing the difference of optical performance of the antireflective coating when applied on different substrates with different refractive index.

Considering the very large number of configurations that can be selected, this computer-implemented method allows to reduce the refractive index mismatch between a plurality of different substrates and a base layer of an optical component.

According to an embodiment of the designing method, an initial configuration (AR1) of the interferential stack is provided, said initial configuration being obtained by a conventional antireflective stack design method, the plurality of configurations (AR2 to ARn) being derived from said initial configuration, the selected configuration of the interferential stack having a smaller deviation of the optical performance ($\Delta$OP) than the initial configuration (AR1).

According to an embodiment of the designing method, each configuration (AR2 to ARn) of the interferential stack comprises a same plurality of layers of compounds, thickness of at least one layer being different from a configuration to another.

According to an embodiment of the designing method, the configurations (AR2 to ARn) are provided by varying each layer of the interferential stack from a minimum to a maximum thickness using a predetermined step size.

According to an embodiment of the designing method, a mean optical performance (OP) is further determined for each configuration (AR2 to ARn) depending on the values of a same configuration determined for each substrate.

According to an embodiment of the designing method, said at least one optical property comprises one or more among Rv, h*, C* and Ruv parameters.

According to an embodiment of the designing method, it further comprises the steps of:

- identifying at least one optical property considered to be relevant for selecting the configuration (ARs) having the minimized deviation of the optical performance ($\Delta$OP),
- selecting the configuration (ARs) having the minimized deviation of the optical performance ($\Delta$OP) depending on the minimized deviation of the optical performance ($\Delta$OP) based on the at least one identified optical property.

According to an embodiment of the designing method, the optical performance deviation is the mean square root deviation of the optical properties for a same configuration.

According to an embodiment of the designing method, the plurality of substrates comprises two or more among substrates with refractive index of 1.56, 1.60 and 1.67.

According to an embodiment of the designing method, an optical component is manufactured, said optical component comprising a substrate, a base layer (HC) and an antireflective coating based on the selected configuration (ARs) of interferential stack.

The invention also provides a computer program comprising instructions for performing the method as described above.

The invention further provides a device comprising memory having recorded thereon the computer program as described above, the device optionally further comprising a processor and a graphical user interface coupled to the memory.

The invention is described in more detail below by way of the figures that show several preferred embodiments of the invention.

Figure 1 shows a graph representing the reflectance of optical components for different wavelength, said optical components comprising different substrates having different refractive index and same antireflective coating and hard coat.

Figure 2 shows a diagram of a computer-implemented method for designing an interferential stack for minimizing the deviation of optical performance of an antireflective coating made from such interferential stack.

Figure 3 shows partial results obtained by the computer-implemented method of figure 2 for some interferential stacks.

The invention concerns a method for designing an interferential stack of an antireflective coating for an optical component.

This method can be implemented by computer such that the method can be performed by a computer program comprising instructions. This computer program may be a module integrated to another computer program (e.g. "MacLeod" software). Hence, a device comprising memory having recorded thereon such computer program can perform the method described below. This device preferably comprises a processor and a graphical user interface coupled to the memory.

The present designing method aims at minimizing the deviation in the optical performance of an antireflective coating when associated with different substrates. These substrates may be any substrate, including mineral glass or organic substrate, preferably organic lens substrates, for example a thermoplastic or thermosetting plastic material.

Thermoplastic may be selected from, for instance: polyamides; polyimide; polysulfones; polycarbonates and copolymers thereof; poly(ethylene terephtalate) and polymethylmethacrylate (PMMA).

Thermoset materials may be selected from, for instance: cycloolefin copolymers such as ethylene/norbomene or ethylene/cyclopentadiene copolymers; homo- and copolymers of allyl carbonates of linear or branched aliphatic or aromatic polyols, such as homopolymers of diethylene glycol bis(allyl carbonate); homo- and copolymers of (meth)acrylic acid and esters thereof, which may be derived from bisphenol A; polymer and copolymer of thio(meth)acrylic acid and esters thereof, polymer and copolymer of allyl esters which may be derived from Bisphenol A or phtalic acids and allyl aromatics such as styrene, polymer and copolymer of urethane and thiourethane, polymer and copolymer of epoxy, and polymer and copolymer of sulphide, disulfide and episulfide, and combinations thereof.

As used herein, a (co)polymer is intended to mean a copolymer or a polymer. As used herein, a (meth)acrylate is intended to mean an acrylate or a methacrylate. As used herein, a polycarbonate (PC) is intended to mean either homopolycarbonates or copolycarbonates and block copolycarbonates.

Refractive indices of these substrates typically range from 1.50 to 1.74, preferably these substrates have refractive index of 1.50, 1.53, 1.55, 1.56, 1.59, 1.60, 1.67 or 1.74.

In a preferred embodiment, the antireflective coating is applied on a lens substrate to form an ophthalmic lens. The substrates may be so-called KR56, MR8 and MR7 substrates. More generally, the substrates onto which the antireflective coating is applied have refractive index of 1.56, 1.60 or 1.67.

As previously mentioned, the substrate is first coated with a base layer, also called hard coat (HC), so that the base layer is disposed between the antireflective coating and the substrate. Prior to the deposition of the hard coat, an impact-resistance primer may be deposited on the substrate main face. Preferred primer compositions are compositions based on polyurethanes and compositions based on latexes, in particular polyurethane latexes and poly(meth)acrylic latexes, as well as their combinations.

The optical performance depends on one or more optical properties of the antireflective coating. These optical properties may be any optical property, preferably one or more among the mean light reflection factor (Rv), hue angle (h*), Chroma (C*), and the mean reflection factor (Ruv). All these optical properties are usually measured for an angle of incidence, for instance of 15°, but can be evaluated for any angle of incidence. In this regard, these optical properties are noted Rv15°, h*15°, C*15° and Ruv15°.

The mean light reflection factor (Rv) is such as defined in the ISO 13666:1998 Standard, and measured in accordance with the ISO 8980-4, i.e. this is the weighted spectral reflection average over the whole visible spectrum between 380 and 780 nm. Rv is usually measured for an angle of incidence lower than 17°, typically of 15°, but can be evaluated for any angle of incidence.

The mean reflection factor (Ruv), weighted by the W(X) function defined according to the ISO 13666:1998 Standard and noted Ruv may be defined through the following relation:

$$R_{UV} = \frac{\int_{280}^{380} W(\lambda) \cdot R(\lambda) \cdot d\lambda}{\int_{280}^{380} W(\lambda) \cdot d\lambda}$$

wherein R(λ) represents the lens spectral reflection factor at a given wavelength, and W(λ) represents a weighting function equal to the product of the solar spectrum irradiance Es(λ) and the efficiency relative spectral function S(λ).

The spectral function W(λ), enabling to calculate the ultraviolet radiation transmission factors, is defined according to the ISO 13666:1998 Standard. It makes it possible to express the ultraviolet solar radiation distribution tempered by the relative spectral efficiency of such radiation for the wearer, since it simultaneously takes both the solar spectral energy Es(λ) into account, which does globally emit less UVB-rays as compared to UVA-rays, and the spectral efficiency S(λ), UVB-rays being more harmful than UVA-rays.

The colorimetric parameters (C*) and (h*) are as defined in the standard colorimetric system CIE (1976) L*a*b* system, taking the standard illuminant D65 illuminant and the observer into account.

As previously mentioned, the antireflective coating is built or defined from an interferential stack. This interferential stack defines the composition or the layout of the antireflective coating. Said interferential stack comprises a plurality of layers having different refractive indices. Preferably, said interferential stack is made of alternating layers of low refractive index and high refractive index. These compounds can be, but not limited to, silica ($SiO_2$), zirconium dioxide ($ZrO_2$), or indium tin oxide (ITO). When all these layers are stacked together, it provides an antireflective function depending on the nature of the compounds, the thickness of the layers as well as the position and the number of these layers.

This interferential stack is configured to reduce the refractive index mismatch between a substrate and a base layer of an optical component. The present method aims at allowing a selected antireflective stack to provide this reduction for substrates having different refractive index.

As shown on figure 2, an embodiment of the designing method is represented in a diagram 20.

An initial configuration AR1 of the interferential stack is provided 100. Said initial configuration AR1 comprises a plurality of layers of compounds. This initial configuration AR1 is preferably obtained by a conventional antireflective stack design method, i.e. by only considering the base layer as the substrate. This conventional design method is for example performed using Macleod software.

By "conventional design method" we mean a method configured to determine a designed configuration having optimized thickness for at least one layer from a primary configuration of an interferential stack. This primary configuration has primary or non-optimized thickness for each layer of compounds. These thicknesses are for example entered by a user in the software. An optimization of the thickness of each layer of compounds is performed depending on a predetermined incoming medium, a substrate onto which the antireflective stack is to be applied and initial thicknesses for each layer of compounds. In other words, a user enters unoptimized values of thickness for each layer of compounds as well as the nature of each layer. Then, the user enters the incoming medium to which the antireflective stack is to be exposed as well as the substrate onto which the antireflective stack is to be applied. The incoming medium is generally the air in the case of an ophthalmic lens.

A plurality of configurations AR2 to ARn of an interferential stack is then provided 200. A plurality of substrates to be associated with the interferential stack is also provided 200.

The configurations AR2 to ARn are derived from said initial configuration AR1. In other words, the initial configuration AR1 defines a basis for setting the number, the position and the nature of the compounds. Consequently, configurations AR2 to ARn have the same number of layers with the same position and nature of compounds as the initial configuration AR1. Therefore, each configuration AR2 to ARn of the interferential stack comprises a same plurality of layers of compounds.

For instance, when the initial configuration is made of nine layers with the following compounds (in this order): SiO2, ITO, SiO2, ZrO2, SiO2, ZrO2, UL, ZrO2, SiO2, all the configurations AR2 to ARn have the same layers.

Configurations AR2 to ARn differ from each other by having at least one layer with a different thickness. Particularly, configurations AR2 to ARn are provided by varying each layer of the interferential stack from a minimum to a maximum thickness using a predetermined step size. In other words, a minimum and a maximum thickness variation range is set for each layer of the antireflective stack with a predetermined step size. Then, all the possible combinations of configuration are determined to provide the configurations AR2 to ARn. This determination is for example carried out using the Monte Carlo simulation. This simulation relies on repeated random sampling to obtain numerical results.

Then, a value of at least one optical property representative of the optical performance OP of the interferential stack is determined 300 for each configuration AR2 to ARn. Said value of at least one optical property is determined for each substrate. Therefore, determining step 300 allows to obtain an OP value of each configuration for each substrate.

This optical property representative of the optical performance OP is preferably a mean optical performance which is determined using the following relation:

$$\underline{OP}=(OP_1+OP_2+...+OP_n)/n$$

wherein OP1 is the optical property value determined for a first substrate, OP2 is the optical property value determined for a second substrate, etc.

As shown on figure 3, a table 30 shows an example of results obtained with the determining step 300. In this example, twelve configurations are shown. These 12 configurations comprise eight layers ("T_1" to "T_8"). The eighth layer is a hard coat corresponding to the base layer. Three optical properties ("R_Y", "R_c" and "R_h") were determined for each of the twelve configurations. The optical property "R_Y", "R_c" and "R_h" respectively correspond to the mean light reflection factor (Rv), Chroma (C*) and hue angle (h*). In the standard colorimetry hue angle is defined in the range of 0° to +360°. As in the example of figure 3, if hue angle is calculated in the range of -180° to 180° and, therefore, in cases h*<0, 360° have to be added to the values of the "R_h" optical property to obtain a hue angle defined in the range of 0° to 360°. For instance, the hue angle for MR8 material for the family 11 is approximately 327.2°.

These optical properties were determined for three different substrates ("KR56", "MR8" and "MR7"). As an example, the highlighted family 11 has OP1 (R_Y)= 0.33, OP2 (R_Y)= 0.47 and OP3 (R_Y)=0.67 for the optical property "R_Y". In this case OP(R_Y)=0.49.

A deviation of the optical performance ΔOP between the substrates is then determined 400 for each configuration AR2 to ARn. This deviation of the optical performance ΔOP is determined depending on the values of a same configuration determined for each substrate. This deviation of the optical performance ΔOP is determined for each optical property.

In other words, the deviation ΔOP is associated to a single optical property and reflects the deviation of this optical property when determined with the different substrates.

The deviation of the optical performance ΔOP is preferably the mean square root deviation which is determined using the following relation:

$$\Delta \underline{OP} = \{[(OP_1-\underline{OP})^2+(OP_2-\underline{OP})^2+...+(OP_n-\underline{OP})^2]/(n-1)\}^{1/2}$$

wherein OP is the mean optical property.

The deviation of the optical performance ΔOP is also shown in the table 30 of figure 3. We can see that ΔOP(R_Y) which depends on OP1 (R_Y), OP2 (R_Y) and OP3 (R_Y) as well as OP(R_Y) is equal to 0.15 for the highlighted family. This deviation ΔOP (R_Y) is representative of the deviation of the optical property "R_Y" for the three studied substrates.

The deviation of the optical performance ΔOP is then recorded for each optical property in a database.

The diagram 20 comprises a loop 500 after the determining step 400 to show that the method is iterative to determine an OP value and a deviation of the optical performance ΔOP for each configuration AR2 to ARn. The step 600 corresponds to the determination of another configuration of the antireflective stack. Therefore, the designing method performs n loops for n possible configurations depending of the minimum/maximum thickness and the step size previously set.

Then, when a deviation of the optical performance ΔOP is determined for each configuration AR2 to ARn, the configurations AR2 to ARn are compared 700. This comparison may be performed by identifying one or more optical properties. In other words, one or more among the deviation of the optical performance ΔOP for the "R_Y", the "R_c" and the "R_h" optical properties may be compared for each configuration in the example of table 30.

A configuration ARs of the interferential stack is then selected 800. The selected configuration ARs of the interferential stack is chosen to have at least one minimized deviation of the optical performance ΔOP. Particularly, the selected configuration ARs is chosen to have a smaller deviation of the optical performance ΔOP than the initial configuration AR1.

This selection may be performed depending on one or more among the optical properties. Hence, at least one optical property considered to be relevant for selecting the configuration ARs can be first identified before the selecting step 800. Then, the configuration ARs is selected depending on the minimized deviation of the optical performance ΔOP based on the at least one identified optical property.

In the example of figure 3, the selection may depend on one or more among the "R_Y", the "R_c" and the "R_h" optical properties. Hence, the families 9-13 may be selected when considering only the ΔOP (R_Y) whereas the families 1-6 may be selected when considering only the ΔOP (R_c).

An optical component comprising a substrate, a base layer and an antireflective coating based on the selected configuration ARs of interferential stack can be then manufactured.

## EXAMPLE

An initial configuration AR1 of an interferential stack is first defined using a conventional method.

In practical, a user first sets up the antireflective stack in the design window of "MacLeod" software. This means he indicates the initial materials and thicknesses of the layers within the antireflective stack. A first layer of silica, a second layer of Indium tin oxide, a third layer of silica, a fourth layer of zirconia, a fifth layer of silica, a sixth layer of zirconia and a seventh thick layer of silica (called under layer UL) are indicated. The substrate is then defined as the hard coat. By default, the incoming medium will be air and does not need to be changed.

Then, in order to set for an antireflective target, one can go in the color tab of the target window of "MacLeod" software and add a minimization of the Y value (of the XYZ colorimetric space defined by the CIE) in D65 illuminant and 1931 observer. That is usually done at 15 degrees in unpolarized light. The target is set at Y under 1% with a tolerance of 0.1%.

"MacLeod" software is then run for the optimization which will change the thicknesses in the antireflective stack in order to provide an initial antireflective stack AR1. One can verify the level of performance by clicking the color button that will calculate the Y value of said optimized stack. The thicknesses that are now indicated in the Design window correspond to an antireflective design.

In this example initial configuration is as follows:

**Table 1:** Initial configuration AR1

| **Material** | Thickness (nm) |
|---|---|
| Si02 | 70.48 |

(continued)

| **Material** | Thickness (nm) |
|---|---|
| ITO | 6.5 |
| Si02 | 15.32 |
| Zr02 | 92.31 |
| Si02 | 38.77 |
| Zr02 | 14.1 |
| UL | 148.64 |
| HC1.5 | - |

This initial configuration AR1 is obtained using a conventional method. Some optical performance of this AR stack, when applied on three kinds of substrates, KR56 (from KOC), MR8 and MR7 (from Mitsui Toatsu Chemicals Inc.), is listed in table 2. Optical properties Rv, h* and C* are determined for an incidence angle of 15°, while Ruv is determined for an incidence angle of 35°. The substrates "KR56", "MR8" and "MR7" have a refractive index of 1.56, 1.60 and 1.67, respectively. The base layer is a hard coat "MP7110" having a refractive index of 1.5.

**Table 2:** optical properties of the initial configuration AR1

| | Rv15° | h*15° | C*15° | Ruv35° |
|---|---|---|---|---|
| Ex1 - 1.5AR | 0.308 | 300.0 | 25.0 | 2.293 |
| 1.5AR_KR56 | 0.336 | 300.2 | 24.9 | 2.340 |
| 1.5AR_MR8 | 0.441 | 300.9 | 24.2 | 2.436 |
| 1.5AR_MR7 | 0.626 | 301.9 | 23.0 | 2.583 |
| OP | 0.467 | 301.0 | 24.0 | 2.453 |
| ΔOP | 0.120 | 0.706 | 0.753 | 0.100 |

Starting from the initial configuration AR1 shown in table 1, a Monte Carlo simulation is conducted by changing the thickness of each layer in a certain range with a certain step size as shown in the table 3 below.

**Table 3:** Thickness range and step size settings

| **Minimum thickness** | **Step size** | **Maximum thickness** | **Material** |
|---|---|---|---|
| 60 | 2 | 100 | Si02 |
| 6.5 | - | 6.5 | Sn02 |
| 10 | 1 | 15 | Si02 |
| 80 | 1 | 100 | Zr02 |
| 30 | 1 | 40 | Si02 |
| 10 | 1 | 15 | Zr02 |
| 150 | - | 150 | SiO2_UL |
| 3000 | 100 | 3500 | Titus |

Optical performance of millions possible combination stacks on different substrates is calculated and the corresponding deviation of the optical performance is also calculated. Then, the millions configurations of stacks are ranked from the lowest to the most deviation of the optical performance ΔOP. Some of these configurations are listed in the table of figure 3.

"Family 11" is then selected as a reference for anti-reflective stack refinement. The Monte Carlo simulation results indicate that the antireflective stack configuration with hue angle at around 327.5° and Chroma about 15 will have the lowest deviation of the optical performance ΔOP. According to these results, the structure of the initial configuration AR1 as shown in table 1 is adjusted and refined. This optimization step is conducted using "Macleod". The structure of the final optimized antireflective stack is shown in table 4 below.

**Table 4:** final optimized antireflective stack

| Material | Thickness (nm) |
|---|---|
| Si02 | 72.38 |
| ITO | 6.5 |
| Si02 | 7.54 |
| Zr02 | 85.17 |
| Si02 | 32.86 |
| Zr02 | 11.42 |
| UL | 150 |
| HC1.5 | 3000 |
| Substrate (KR56, MR8 or MR7) | |

## Claims

1. A computer-implemented method for designing an interferential stack of an antireflective coating for an optical component to minimize the deviation in the optical performance when associated with different substrates, the interferential stack being configured to reduce the refractive index mismatch between a substrate and a base layer (HC) of the optical component, the method comprising the steps of:

   - providing (100, 200) a plurality of configurations (AR2 to ARn) of an interferential stack and a plurality of substrates to be associated with the interferential stack,
   - determining (300) for each configuration (AR2 to ARn) of the interferential stack a value of at least one optical property representative of the optical performance (OP) of the interferential stack, said value of at least one optical property being determined for each substrate,
   - determining (400) for each configuration (AR2 to ARn) a deviation of the optical performance (ΔOP) between the substrates depending on the values of a same configuration determined for each substrate, a deviation of the optical performance (ΔOP) being determined for each optical property,
   - selecting (700, 800) a configuration (ARs) of the interferential stack having at least one minimized deviation of the optical performance (ΔOP).

2. The method according to claim 1, wherein an initial configuration (AR1) of the interferential stack is provided, said initial configuration (AR1) being obtained by a conventional antireflective stack design method, the plurality of configurations (AR2 to ARn) being derived from said initial configuration (AR1), the selected configuration (ARs) of the interferential stack having a smaller deviation of the optical performance (ΔOP) than the initial configuration (AR1).

3. The method according to claim 1 or 2, wherein each configuration (AR2 to ARn) of the interferential stack comprises a same plurality of layers of compounds, thickness of at least one layer being different from a configuration to another.

4. The method according to claim 3, wherein the configurations (AR2 to ARn) are provided by varying each layer of the interferential stack from a minimum to a maximum thickness using a predetermined step size.

5. The method according to any one of claims 1 to 4, wherein a mean optical performance (OP) is further determined for each configuration (AR2 to ARn) depending on the values of a same configuration determined for each substrate.

6. The method according to any one of claims 1 to 5, wherein said at least one optical property comprises one or more among Rv, h*, C* and Ruv parameters.

7. The method according to any one of claims 1 to 6, further comprising the steps of:

- identifying at least one optical property considered to be relevant for selecting the configuration (ARs) having the minimized deviation of the optical performance (ΔOP),
- selecting the configuration (ARs) having the minimized deviation of the optical performance (ΔOP) depending on the minimized deviation of the optical performance (ΔOP) based on the at least one identified optical property.

8. The method according to any one of claims 1 to 7, wherein the optical performance deviation (ΔOP) is the mean square root deviation of the optical properties for a same configuration.

9. The method according to any one of claims 1 to 8, wherein the plurality of substrates comprises two or more among substrates with refractive index of 1.56, 1.60 and 1.67.

10. The method according to any one of claims 1 to 9, wherein an optical component is manufactured, said optical component comprising a substrate, a base layer (HC) and an antireflective coating based on the selected configuration (ARs) of interferential stack.

11. A computer program comprising instructions for performing the method of any of claims 1 to 10.

12. A device comprising memory having recorded thereon the computer program of claim 11, the device optionally further comprising a processor and a graphical user interface coupled to the memory.

**Patentansprüche**

1. Computerimplementiertes Verfahren zum Entwurf eines Interferenzstapels einer Antireflexbeschichtung für eine optische Komponente, um bei Verbindung mit verschiedenen Substraten die Abweichung der optischen Leistung zu minimieren, wobei der Interferenzstapel so konfiguriert wird, dass er die Brechungsindexfehlanpassung zwischen einem Substrat und einer Basisschicht (HC) der optischen Komponente verringert, wobei das Verfahren die folgenden Schritte umfasst:

- Bereitstellen (100, 200) einer Mehrzahl von Konfigurationen (AR2 bis ARn) eines Interferenzstapels und einer Mehrzahl von Substraten, die mit dem Interferenzstapel verbunden werden soll,
- Bestimmen (300) eines Wertes mindestens einer optischen Eigenschaft, die die optische Leistung (OP) des Interferenzstapels darstellt, für jede Konfiguration (AR2 bis ARn) des Interferenzstapels, wobei der Wert der mindestens einen Eigenschaft für jedes Substrat bestimmt wird,
- Bestimmen (400) einer Abweichung der optischen Leistung (ΔOP) zwischen den Substraten für jede Konfiguration (AR2 bis ARn) in Abhängigkeit von den Werten einer gleichen Konfiguration, die für jedes Substrat bestimmt werden, wobei eine Abweichung der optischen Leistung (ΔOP) für jede optische Eigenschaft bestimmt wird,
- Auswählen (700, 800) einer Konfiguration (ARs) des Interferenzstapels, die zumindest eine minimierte Abweichung der optischen Leistung (ΔOP) aufweist.

2. Verfahren nach Anspruch 1, wobei eine anfängliche Konfiguration (AR1) des Interferenzstapels bereitgestellt wird, die anfängliche Konfiguration (AR1) durch ein herkömmliches Antireflexstapelentwurfsverfahren erhalten wird, die Mehrzahl von Konfigurationen (AR2 bis ARn) von der anfänglichen Konfiguration (AR1) abgeleitet wird, und die ausgewählte Konfiguration (ARs) des Interferenzstapels eine kleinere Abweichung der optischen Leistung (ΔOP) als die anfängliche Konfiguration (AR1) aufweist.

3. Verfahren nach Anspruch 1 oder 2, wobei jede Konfiguration (AR2 bis ARn) des Interferenzstapels eine gleiche Mehrzahl von Schichten von Verbindungen umfasst, wobei eine Dicke mindestens einer Schicht von einer Konfiguration einer anderen verschieden ist.

4. Verfahren nach Anspruch 3, wobei die Konfigurationen (AR2 bis ARn) durch Ändern jeder Schicht des Interferenzstapels von einer kleinsten zu einer größten Dicke unter Verwendung einer vorbestimmten Schrittgröße bereitgestellt werden.

5. Verfahren nach einem der Ansprüche 1 bis 4, wobei eine mittlere optische Leistung (OP) ferner für jede Konfiguration (AR2 bis ARn) in Abhängigkeit von den Werten einer gleichen Konfiguration bestimmt wird, die für jedes Substrat bestimmt werden.

**6.** Verfahren nach einem der Ansprüche 1 bis 5, wobei die mindestens eine optische Eigenschaft einen oder mehrere unter den Parametern Rv, h*, C* und Ruv umfasst.

**7.** Verfahren nach einem der Ansprüche 1 bis 6, ferner umfassend die folgende Schritte:

- Identifizieren mindestens einer optischen Eigenschaft, die als relevant für das Auswählen der Konfiguration (ARs) mit der minimierten Abweichung der optischen Leistung (ΔOP) angesehen wird,
- Auswählen der Konfiguration (ARs) mit der minimierten Abweichung der optischen Leistung (ΔOP) in Abhängigkeit von der minimierten Abweichung der optischen Leistung (ΔOP),die auf der mindestens einen identifizierten optischen Eigenschaft basiert.

**8.** Verfahren nach einem der Ansprüche 1 bis 7, wobei die Abweichung der optischen Leistung (ΔOP) die mittlere quadratische Abweichung der optischen Eigenschaften für eine gleiche Konfiguration ist.

**9.** Verfahren nach einem der Ansprüche 1 bis 8, wobei die Mehrzahl von Substraten zwei oder mehr unter Substraten mit einem Brechungsindex von 1,56, 1,60 und 1,67 umfasst.

**10.** Verfahren nach einem der Ansprüche 1 bis 9, wobei eine optische Komponente hergestellt wird, wobei die optische Komponente ein Substrat, eine Basisschicht (HC) und eine Antireflexbeschichtung basierend auf der ausgewählten Konfiguration (ARs) des Interferenzstapels umfasst.

**11.** Computerprogramm, umfassend Anweisungen zum Durchführen des Verfahrens nach einem der Ansprüche 1 bis 10.

**12.** Vorrichtung, umfassend einen Speicher, der das Computerprogramm nach Anspruch 11 darauf aufgezeichnet aufweist, wobei die Vorrichtung optional einen Prozessor und eine grafische Benutzeroberfläche gekoppelt mit dem Speicher umfasst.

## Revendications

**1.** Procédé mis en œuvre par ordinateur pour concevoir un empilement interférentiel d'un revêtement antireflet pour un composant optique pour minimiser l'écart de performance optique lorsqu'il est associé à différents substrats, l'empilement interférentiel étant configuré pour réduire le désaccord d'indice de réfraction entre un substrat et une couche de base (HC) du composant optique, le procédé comprenant les étapes suivantes :

- obtention (100, 200) d'une pluralité de configurations (AR2 à ARn) d'un empilement interférentiel et d'une pluralité de substrats devant être associés à l'empilement interférentiel,
- détermination (300), pour chaque configuration (AR2 à ARn) de l'empilement interférentiel, d'une valeur d'au moins une propriété optique représentative de la performance optique (OP) de l'empilement interférentiel, ladite valeur d'au moins une propriété optique étant déterminée pour chaque substrat,
- détermination (400), pour chaque configuration (AR2 à ARn), d'un écart de performance optique (ΔOP) entre les substrats en fonction des valeurs d'une même configuration déterminées pour chaque substrat, un écart de performance optique (ΔOP) étant déterminé pour chaque propriété optique,
- sélection (700, 800) d'une configuration (ARs) de l'empilement interférentiel ayant au moins un écart de performance optique (ΔOP) minimisé.

**2.** Procédé selon la revendication 1, dans lequel une configuration initiale (AR1) de l'empilement interférentiel est obtenue, ladite configuration initiale (AR1) étant obtenue par un procédé de conception d'empilement antireflet conventionnel, la pluralité de configurations (AR2 à ARn) étant déduite de ladite configuration initiale (AR1), la configuration sélectionnée (ARs) de l'empilement interférentiel ayant un plus petit écart de performance optique (ΔOP) que la configuration initiale (AR1).

**3.** Procédé selon la revendication 1 ou 2, dans lequel chaque configuration (AR2 à ARn) de l'empilement interférentiel comprend une même pluralité de couches de composés, l'épaisseur d'au moins une couche étant différente d'une configuration à l'autre.

4. Procédé selon la revendication 3, dans lequel les configurations (AR2 à ARn) sont obtenues par variation de chaque couche de l'empilement interférentiel d'une épaisseur minimale à une épaisseur maximale au moyen d'une taille de pas prédéterminée.

5. Procédé selon l'une quelconque des revendications 1 à 4, dans lequel une performance optique moyenne (OP) est en outre déterminée pour chaque configuration (AR2 à ARn) en fonction des valeurs d'une même configuration déterminées pour chaque substrat.

6. Procédé selon l'une quelconque des revendications 1 à 5, dans lequel ladite au moins une propriété optique en comprend une ou plusieurs parmi les paramètres Rv, h*, C* et Ruv.

7. Procédé selon l'une quelconque des revendications 1 à 6, comprenant en outre les étapes suivantes :

- identification d'au moins une propriété optique considérée comme pertinente pour la sélection de la configuration (ARs) ayant l'écart de performance optique (ΔOP) minimisé,
- sélection de la configuration (ARs) ayant l'écart de performance optique (ΔOP) minimisé en fonction de l'écart de performance optique (ΔOP) minimisé sur la base de l'au moins une propriété optique identifiée.

8. Procédé selon l'une quelconque des revendications 1 à 7, dans lequel l'écart de performance optique (ΔOP) est l'écart moyen quadratique des propriétés optiques pour une même configuration.

9. Procédé selon l'une quelconque des revendications 1 à 8, dans lequel la pluralité de substrats en comprend au moins deux parmi des substrats avec un indice de réfraction de 1,56, 1,60 et 1,67.

10. Procédé selon l'une quelconque des revendications 1 à 9, dans lequel un composant optique est fabriqué, ledit composant optique comprenant un substrat, une couche de base (HC) et un revêtement antireflet basé sur la configuration sélectionnée (ARs) de l'empilement interférentiel.

11. Programme informatique comprenant des instructions pour effectuer le procédé de l'une quelconque des revendications 1 à 10.

12. Dispositif comprenant une mémoire sur laquelle est enregistré le programme informatique de la revendication 11, le dispositif comprenant en outre éventuellement un processeur et une interface utilisateur graphique couplés à la mémoire.

# Fig. 1

10, 12

| MATERIALS/ COMPOUNDS | THICKNESS (nm) |
|---|---|
| SiO2 | 71.62 |
| ITO | 6.5 |
| SiO2 | 12.83 |
| ZrO2 | 89.97 |
| SiO2 | 36.27 |
| ZrO2 | 11.45 |
| UL | 175 |
| ZrO2 | 4.87 |
| SiO2 | 21.25 |
| HC1.5 | |

16

| | Rv | h* | C* | Ruv |
|---|---|---|---|---|
| 1.5AR | 0.29 | 300 | 25 | 2.27 |
| 1.5AR_KR56 | 0.32 | 300 | 24.9 | 2.30 |
| 1.5AR_MR8 | 0.43 | 301 | 24.3 | 2.41 |
| 1.5AR_MR7 | 0.61 | 302 | 23.2 | 2.57 |

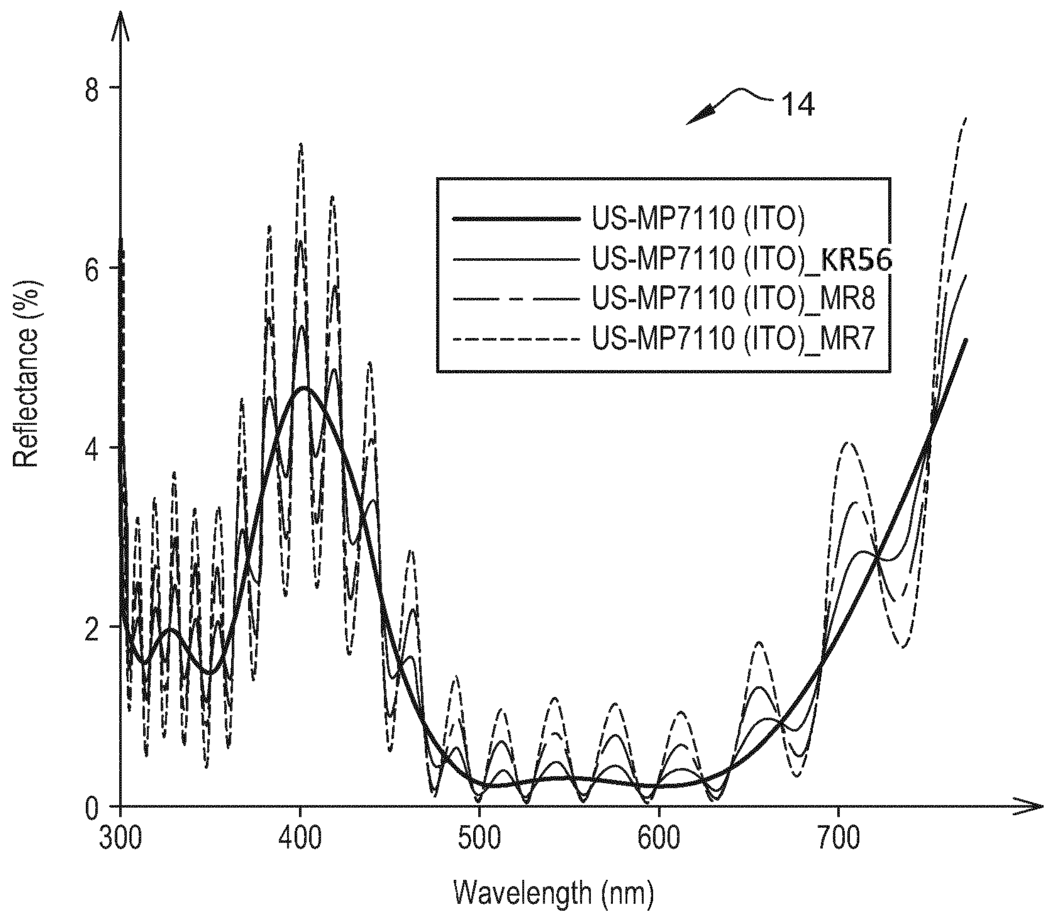

Fig. 2

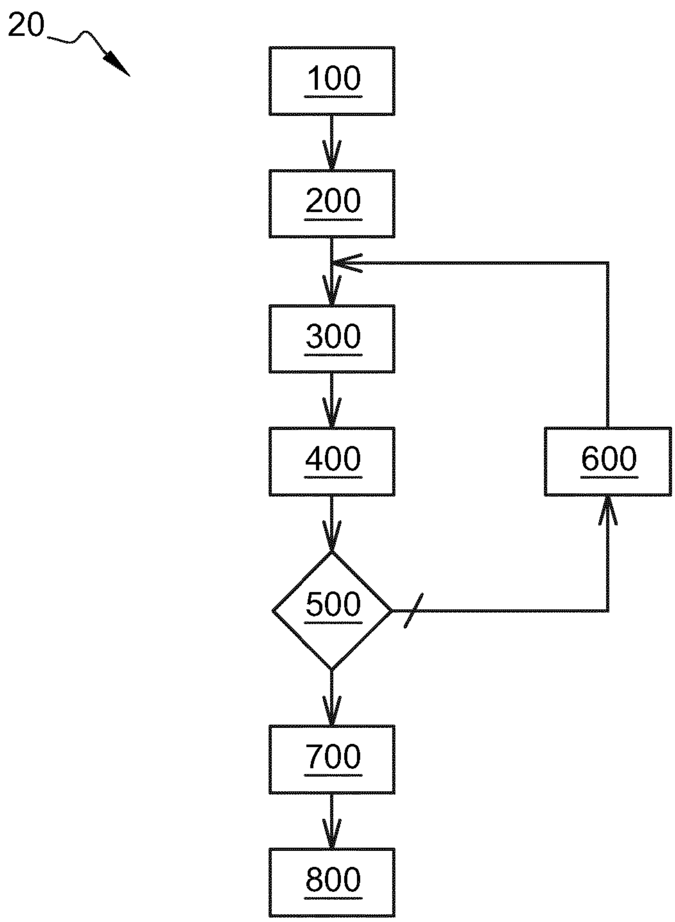

| | Thicknesses | | | | | | | | KR56 | | | MR8 | | | MR7 | | | Delta OP | | |
|---|---|---|---|---|---|---|---|---|---|---|---|---|---|---|---|---|---|---|---|---|
| Family | T_1 | T_2 | T_3 | T_4 | T_5 | T_6 | T_7 | T_8 | R_Y | R_c | R_h | R_Y | R_c | R_h | R_Y | R_c | R_h | dOP R_Y | dOP R_h | dOP R_c |
| 1 | 70 | 6.5 | 10 | 81 | 30 | 14 | 150 | 3400 | 0.31 | 14.09 | -35.29 | 0.45 | 14.12 | -35.49 | 0.65 | 13.82 | -35.16 | 0.15 | 0.2 | 0.11 |
| 2 | 70 | 6.5 | 10 | 81 | 30 | 14 | 150 | 3100 | 0.3 | 14.1 | -35.33 | 0.45 | 14.14 | -35.59 | 0.65 | 13.85 | -35.3 | 0.15 | 0.2 | 0.11 |
| 3 | 70 | 6.5 | 10 | 81 | 30 | 14 | 150 | 3000 | 0.31 | 14.1 | -35.33 | 0.45 | 14.15 | -35.62 | 0.65 | 13.94 | -35.13 | 0.15 | 0.2 | 0.11 |
| 4 | 70 | 6.5 | 10 | 81 | 30 | 14 | 150 | 3200 | 0.31 | 14.1 | -35.36 | 0.45 | 14.16 | -35.72 | 0.65 | 13.96 | -35.26 | 0.15 | 0.2 | 0.11 |
| 5 | 70 | 6.5 | 10 | 81 | 30 | 14 | 150 | 3300 | 0.3 | 14.11 | -35.39 | 0.45 | 14.17 | -35.75 | 0.65 | 13.97 | -35.33 | 0.15 | 0.2 | 0.11 |
| 6 | 70 | 6.5 | 10 | 81 | 30 | 14 | 150 | 3500 | 0.3 | 14.11 | -35.39 | 0.45 | 14.18 | -35.79 | 0.65 | 13.98 | -35.36 | 0.15 | 0.2 | 0.11 |
| 7 | 70 | 6.5 | 11 | 81 | 33 | 14 | 150 | 3400 | 0.31 | 14.28 | -34.96 | 0.46 | 14.3 | -35.12 | 0.66 | 14 | -34.79 | 0.15 | 0.19 | 0.12 |
| 8 | 70 | 6.5 | 11 | 81 | 33 | 14 | 150 | 3100 | 0.31 | 14.28 | -34.99 | 0.45 | 14.32 | -35.19 | 0.65 | 14.03 | -34.93 | 0.15 | 0.19 | 0.12 |
| 9 | 70 | 6.5 | 10 | 82 | 33 | 14 | 150 | 3100 | 0.32 | 15.06 | -32.53 | 0.47 | 15.1 | -32.72 | 0.67 | 14.71 | -32.53 | 0.15 | 0.16 | 0.16 |
| 10 | 70 | 6.5 | 10 | 82 | 33 | 14 | 150 | 3500 | 0.33 | 15.07 | -32.56 | 0.47 | 15.13 | -32.91 | 0.67 | 14.75 | -32.8 | 0.15 | 0.16 | 0.16 |
| **11** | **70** | **6.5** | **10** | **82** | **33** | **14** | **150** | **3000** | **0.33** | **15.06** | **-32.53** | **0.47** | **15.11** | **-32.8** | **0.67** | **14.81** | **-32.46** | **0.15** | **0.16** | **0.16** |
| 12 | 70 | 6.5 | 10 | 82 | 33 | 14 | 150 | 3200 | 0.33 | 15.07 | -32.56 | 0.47 | 15.12 | -32.85 | 0.67 | 14.82 | -32.52 | 0.15 | 0.16 | 0.16 |
| 13 | 70 | 6.5 | 10 | 82 | 33 | 14 | 150 | 3300 | 0.32 | 15.07 | -32.59 | 0.47 | 15.13 | -32.94 | 0.67 | 14.85 | -32.65 | 0.15 | 0.16 | 0.16 |
| 14 | 70 | 6.5 | 14 | 86 | 33 | 14 | 150 | 3400 | 0.36 | 13.79 | -34.24 | 0.5 | 13.8 | -34.31 | 0.71 | 13.4 | -34.08 | 0.15 | 0.18 | 0.16 |
| 15 | 70 | 6.5 | 14 | 86 | 33 | 14 | 150 | 3100 | 0.36 | 13.8 | -34.28 | 0.5 | 13.74 | -34.65 | 0.7 | 13.42 | -34.22 | 0.15 | 0.18 | 0.16 |
| 16 | 70 | 6.5 | 14 | 86 | 33 | 14 | 150 | 3500 | 0.36 | 13.8 | -34.31 | 0.5 | 13.85 | -34.62 | 0.7 | 13.47 | -34.5 | 0.15 | 0.18 | 0.16 |
| 17 | 70 | 6.5 | 14 | 86 | 33 | 14 | 150 | 3000 | 0.36 | 13.8 | -34.28 | 0.5 | 13.84 | -34.52 | 0.71 | 13.53 | -34.12 | 0.15 | 0.18 | 0.16 |

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Universal Wideband Antireflection Coating Designs for Substrates over the Visible Spectral Region by Minimizing Search Method. *JAPANESE JOURNAL OF APPLIED PHYSICS,* 01 July 2004, vol. 43 (7A), 4185-4189